# EUROPEAN PATENT APPLICATION

(11) **EP 2 631 555 A1**
(43) Date of publication of application: **28.08.2013**
(21) Application number: 11833898.7
(22) Date of filing: 19.10.2011
(51) Int. Cl.: F24J 2/07, F03G 6/06

(54) **TOWER RECEIVER CONFIGURATION FOR HIGH POWER VALUES**

(30) Priority: 20.10.2010 ES 201001345 P
(71) Applicant: Abengoa Solar New Technologies, S.A., 41018 Sevilla (ES)
(72) Inventor: MENDEZ MARCOS, José María, E-41018 Sevilla (ES); NAVIO GILABERTE, Raul, E-41018 Sevilla (ES)
(74) Representative: Elzaburu Marquez, Alberto
(86) International application number: PCT/ES2011/070718
(87) International publication number: WO 2012/052588

(57) **Abstract**

Receiver with a configuration of saturated and superheated steam solar modules in a tower solar concentration power plant, in which said configuration allows the incidence of radiation on both sides of the superheated steam module, providing significant benefits for its durability and global control of the power plant.

## Description

High-power tower receiver configuration.

### Subject matter of the invention

This invention concerns a configuration of the receivers in tower solar concentration plants with a physical separation between the evaporator, superheater, and the part for adaptive dynamic control of the heliostat field, in order to obtain superheated steam in an efficient and controlled manner, said configuration ensuring continued durability and normal operation of said solar plant in its various applications: electricity generation, process heat generation, solar fuel generation, and application to thermochemical processes.

The panel configuration proposed is valid for plants where the heat carrier fluid is water-steam or any other fluid that is technically equivalent such as oils, salts, etc., and which do not deviate from the essence of the invention or from the scope defined in the claims.

### Background of the invention

In order to increase the density of the solar radiation flow reaching the earth, use is made of solar thermal power plants (STPs), which enable the optical concentration of said radiation, making it possible to reach concentrations of up to 1,000 suns (1,000 times the direct solar radiation from the sun), and thus higher temperatures in the heat carrier fluids.

There are currently three main technologies developed for use in solar power plants: central receivers, parabolic trough collectors, and Stirling discs. All of them make use only of the direct component of solar radiation, which forces them to have sun monitoring devices.
1. Central receiver systems (3D) use mirrors with a large surface area (40-125 m2 per unit) known as heliostats, which have a control system to reflect direct solar radiation onto a central receiver located on the upper part of a tower. In this technology, concentrated solar radiation heats a fluid in the receiver to temperatures of up to 1,000ºC, the thermal energy from which can be then be used to generate electricity.
2. In parabolic trough collectors (2D), direct solar radiation is reflected by parabolic through mirrors that concentrate it in a receiver pipe or absorber through which a fluid flows. This fluid heats up as a result of the concentrated solar radiation that impacts it at a maximum temperature of 400ºC. In this way, solar radiation is turned into thermal energy, which is later used to generate electricity through a Rankine water/steam cycle. A variation of this technology is Fresnel linear concentration systems, in which the parabolic mirror is replaced by a Fresnel discretisation with smaller mirrors which can be flat or have a slight curvature in their axial axis, and which, by control of their axial orientation, make it possible to concentrate solar radiation on the absorber pipe, which in this kind of application usually remains fixed.
3. Stirling parabolic disc systems (3D) use a surface of mirrors mounted on a revolution parabola which reflect and concentrate sun rays on a specific focus, where the receiver in which the working fluid of a Stirling engine is heated. This engine, in turn, activates a small electrical generator.

In central receiver systems, water-steam technology is currently the most conventional one, as it has been used in such power plants as the Spanish CESA-1, PS10, and PS20 plants, and in the American Solar One power plant.

In PS10 and PS20 steam saturated steam is generated in the solar receiver at a temperature of 255ºC and 45 bar. The steam generated and mixed with saturated liquid is sent to a container where the separation between phases takes place, sending saturated steam to the turbine and the liquid back to the solar receivers.

In CESA-1 and Solar One steam is generated and superheated in the solar receiver at a temperature of 500ºC and 10 Mpa (100 bar), and directly sent to the turbine. In order to reduce transient impact (passing clouds, etc.) a storage system is used (molten salts in the CESA-1 power plant and an oil/rocks thermocline in Solar One). This concept was the first one to be tested as it allows the transposition of usual techniques in thermal plants and allows the steam exiting the solar receiver direct access to the turbine.

Use of superheated steam can allow the implementation of more efficient thermodynamic cycles in power plants.

The difficulty of solar technology for the generation of superheated steam lies in the demanding temperature conditions in which the receiver must operate. The walls of its pipes are continually subjected to thermal cycles between room temperature, the temperature of the steam supplied to this receiver (250 to 310ºC), and the wall temperature (higher than 600ºC) required for generation of superheated steam at 540ºC. Unlike receivers that generate saturated steam at a common temperature for almost all of their parts (saturation temperature at the working pressure), of superheated steam receivers raise the temperature of their pipes the higher their proximity to the steam exit area

The difficulties encountered in the experiments carried out in the 1980s in the CESA 1 and Solar One superheated steam receivers focused mainly on two aspects:
- Lack of system control, particularly in the case of transients, cloud passage, etc. mainly due to the bad thermal properties of superheated steam.
- In both receivers, the most frequent structural flaw was the appearance of cracks. The thermal stress due to large temperature differences led to the appearance of cracks in the interstitial welding between subpanels. This situation arose mainly during stops, when water in a subpanel, at the saturation temperature, flowed towards the upper part, where the temperature was still that of the superheated steam, while this phenomenon did not appear in the adjacent subpanel.
- The problem of working at high pressures, which requires thicker pipe walls, necessitating high thermal gradients to transfer high power densities to the heat carrier fluid.

Patent WO2008/012390 describes a solar energy boiler which uses a combination of saturated steam and superheated steam receivers in which there is a single active wall in the tower which the radiation collected by a heliostat field impacts, referring to the strong thermal stress to which the materials with the proposed configuration are subjected, the object of this invention being, among others, drastic reduction of this stress.

Analogously, patent US 2008/0078378 uses a trough receiver combining saturated and superheated steam receivers which, precisely due to their trough arrangement, have the aforementioned drawback that, due to heterogeneous temperature distribution, it requires special measures for protection against thermal stress in material, which has a negative impact on the receiver's service life.

The invention described as follows tries to make use of the advantages of high-temperature steam, solving the aforementioned problems in the state of the art, achieving greater control over the power plant and thus favouring the stability and durability of the plant and its parts, mainly the receivers.

### Description of the invention

The high-power tower receiver configuration that is the object of this registration solves the aforementioned problems, also providing other additional benefits which will be obvious from the following description.

The receiver configuration proposed can be composed of one or more areas or orientations with respect to the heliostat field, thus making maximum use of the incidence of solar radiation. Each receiver area comprises two or more mutually independent modules. These modules can be aimed at the generation of saturated steam or else at the superheating of this steam. The modules are located within either area, placed in such a way that some modules, given their position, would receive radiation both on their front and on their back sides.

Each module, be it a saturated or superheated steam module, is constituted of one or more panels. These panels are constituted of horizontal or vertical pipes. Moreover, the outermost panels in each of the areas, given the module position, may be irradiated on both sides. Thus two areas share one single module.

The invention which is here described proposes a configuration for the evaporation and superheating modules that is valid for tower solar plants that use heliostats placed around the tower, with various focus points. The invention also includes heliostat field orientation strategies for both types of modules (evaporator and superheater), the strategies being flexible to change heliostat orientation from one type of module to another one as required.

These control strategies will consist in adaptive dynamic controls over the heliostat field for two purposes. The first purpose is to maintain optimal pressure and temperature conditions for entry into the turbine. The second purpose is to provide energy as homogeneously as possible to minimise thermal stress in the receiver panels. To this end, the heliostat field is oriented towards either module (evaporator or superheater) in either area, depending on current needs and the radiation available. Thus, part of the heliostat will be oriented towards an evaporating module and another part will be oriented towards a superheating module, thus achieving greater control over the plant and greater plan stability.

Another benefit of this invention lies in the incidence of the radiation reflected by the heliostats on the front and back side of the superheated steam modules.

Until now, generation of saturated steam has been successfully tested in panels where radiation impacted on only one side. In these cases, the high coefficient of convection achieved by the huge flows of saturated liquid in recirculation and the relatively low temperature of the fluid flowing through the evaporators prevent excessive metal temperatures.

However, for superheated steam receivers in which radiation only impacts on one side and through which steam circulates at a very high temperature, metal temperatures higher than 650º are expected in some areas.

The configuration described here makes it possible to reduce the metal temperature in the superheating modules, with the ensuing technical benefits.

When the modules receive radiation on both sides, for a certain thermal power, the flow peak (W/m2) can be reduced by half (if panel size is maintained) as the available receiver surface to be irradiated is twice as large (only one of the panel sides was previously used). On the other hand, if the panel size was reduced by half for a certain thermal power, the flow peak would be equal as in the case of a configuration with panels irradiated on one side, but the cost of the panels would be much lower as their size would be decreased by half. In this case, even if the flow peak is maintained, given that radiation reaches the panel in a much more uniform manner, (homogeneously on both sides), the thermal stress undergone by the panels will be much lower.

In any case, as the module has a more homogeneous heat supply than in the case of incidence on one side only, stress will be lower and deformation will be more uniform, thus achieving a longer service life of the materials.

The aforementioned benefits are also valid for cases in which the heat carried fluid is not water/steam. Thus, power plants using oils, salts, or any other fluid would also benefit from what was previously described.

### Brief description of the drawings

To complement the previous description and in order to aid better understanding of the characteristics of the invention, a detailed description of a preferred embodiment will now be provided, on the basis of a number of drawings that accompany this descriptive report, in which, for purely orientation purposes and without restriction, the following has been represented:
Figure 1 shows the Scheme of a receiver configuration with four saturation modules and four superheating modules. Radiation reaches the modules from all sides of the heliostat field, and, whereas radiation only impacts one of the sides of the saturation modules, the superheating modules are impacted on both sides.
Figure 2 shows a three-dimensional view of the receiver configuration proposed and the main equipment in a power plant of this nature.

In both figures, numerical references correspond to the following parts and items:
1. Heliostats.
2. Central Tower.
3. Areas (orientations).
4. Saturation modules (Evaporators).
5. Container.
6. Superheating modules (Superheaters).

The details, forms, dimensions, and other accessory items, as well as the materials used in the high-power tower receiver configuration that is the object of this invention may be replaced as required by others that are technically equivalent and do not deviate from the essence of the invention or the scope defined by the following claims.

### Preferred embodiment

This invention concerns a solar receiver configuration located in a tower, with various orientations (or areas).

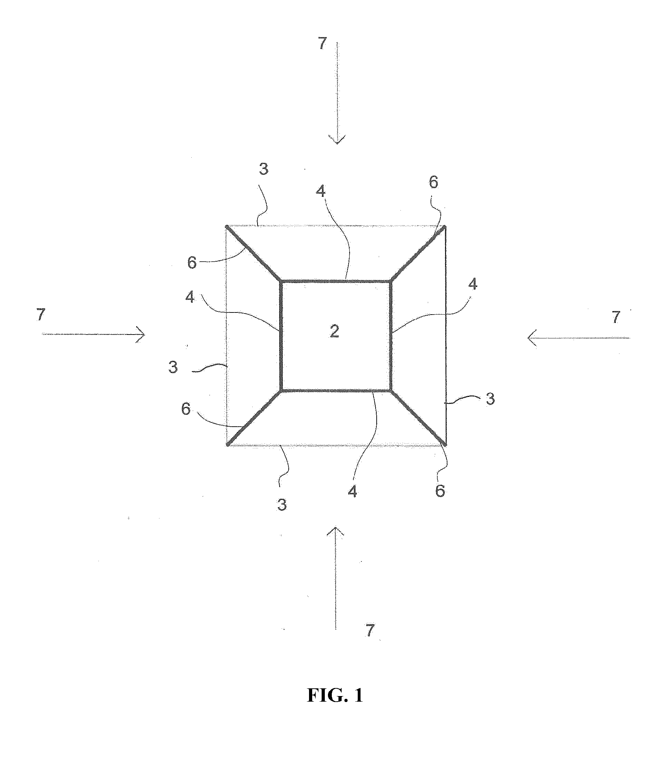

Figure 1 depicts a preferred embodiment of the received by a solar power plant in accordance with this invention, composed of four areas (3), and a set of saturated steam modules (4) (evaporators) and a set of superheated steam modules (6) (superheaters) for the superheating of the generated steam.

This preferred embodiment has the following design of the configuration or location of the modules on the top of the tower (2): four saturated steam modules (4) and four superheated steam modules (6), with the saturated steam modules (4) being oriented perpendicularly to each of the two modules by their side, and with the superheated steam modules (6) forming an angle to each of the two saturation modules (4) by their side.

Each area (3) has three modules, an evaporation module (4) and two superheating modules (6), in such a way that the superheating modules (6) are located on the outermost parts of each area (3). In this way, the superheated steam modules (6), following this innovative configuration, would receive solar radiation (7) on both sides, with two areas (3) thus sharing the same superheating module (6).

The invention described here also optimises the energy from the heliostat field (1) which is transferred in the modules (4,6) to the fluid, as the configuration described makes it possible for the heliostats (1) distributed throughout the entire field to point towards an evaporation module (4) or towards two different superheating modules (6) as required.

This provides great flexibility when it comes to homogeneously distributing the energy from the heliostats (1), which changes depending on the time of day or weather conditions.

These imbalances can be compensated by the configuration of the modules (4,6) and the heliostats (1), favouring the stability of the key process variables for power plant operation.

The configuration described also enables swift response to transients (passing clouds) or other contingencies relative to the solar field and simplifies its control requirements, as if a set of heliostats (1) located with the same orientation with respect to the tower (2) is affected by passing clouds, the decrease in power affects equally the saturated steam modules (4) and the superheating modules (6) located in the same area, and so their steam production, thus removing the control problems resulting from discrepancies in the external conditions in both types of module, as the saturated steam module (4) supplies the superheated steam module (6).

This invention only requires minimum modification of the heliostat orientation and processing element control strategy (pumps and valves) to maintain pressure and temperature conditions at the superheating module (6) exit in case of transients. The same would happen if there is an unavailability of heliostats (1) in one part of the field for any other reason. Any other receiver configuration in which the heliostats (1) in one part of the field are only oriented towards the evaporator (4) or superheater (6) lacks this benefit.

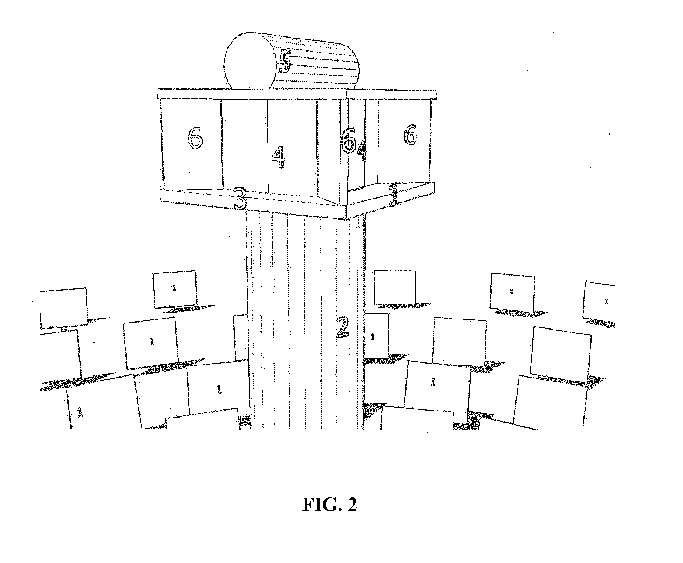

Figure 2 includes a detail of a receiver in which the heat carrier fluid coming from the evaporator modules (4) is superheated in the superheating modules up to temperatures of about 540ºC. Given their position, the superheated steam modules (6) may be irradiated on both sides by the heliostat field (1), and thus two areas (3) share one single superheated steam module (6). A container (5) is located between the evaporation modules (4) and the superheating modules (6), whose purpose is separating the liquid-phase water from the water steam entering the superheater.

Even though the description mentions steam as the heat carrier fluid, possible use of this receiver configuration for other types of fluid, such as molten salts, is not ruled out.

## Claims

1. High-power tower receiver configuration valid for tower solar plants that use heliostats located around said tower, **characterised by** the fact that the receiver configuration includes one or more areas, each area consisting of two or more modules (4, 6); the module(s) (6) being arranged at a certain angle to the nearby module(s) (4); allowing the modules (6) to be irradiated (7) on both sides.

2. High-power tower receiver configuration in accordance with claim 1, **characterised by** the fact that the modules (4, 6) are mutually independent.

3. High-power tower receiver configuration in accordance with claim 1, **characterised by** the fact that a module (6) is shared by two areas (3).

4. High-power tower receiver configuration in accordance with claim 1, **characterised by** the fact that it consists of various areas and each module (4) is oriented perpendicularly with respect to the module (4) in the other area next to it.

5. High-power tower receiver configuration in accordance with claim 1, **characterised by** the fact that each module (4, 6) is constituted of one or more panels.

6. High-power tower receiver configuration in accordance with claim 5, **characterised by** the fact that within an area a module (4) consists of saturated steam panels and the modules (6) consist of superheated steam panels.

7. High-power tower receiver configuration in accordance with claim 5, **characterised by** the fact that within an area all modules (4, 6) consist of saturated steam panels.

8. High-power tower receiver configuration in accordance with claim 5, **characterised by** the fact that within an area a module (4) consists of superheated steam panels and the modules (6) consist of saturated steam panels.

9. High-power tower receiver configuration in accordance with claim 5, **characterised by** the fact that within an area all modules (4, 6) consist of superheated steam panels.

10. High-power tower receiver configuration in accordance with claim 1, **characterised by** the fact that the receivers are composed of horizontal or vertical pipes.

11. High-power tower receiver configuration in accordance with claim 1, **characterised by** the fact that it applies to power plants in which the heat carrier fluid is water steam or any other fluid that is technically equivalent such as oils or salts.

12. High-power tower receiver configuration in accordance with claim 1, **characterised by** the fact that the heliostats direct solar radiation (7) to one module (4) or the other module (6) as required.

13. High-power tower receiver configuration in accordance with any of the aforementioned claims, **characterised by** the fact that the configuration consists of four areas, and each area has three modules.

14. High-power tower receiver configuration in accordance with claim 13, **characterised by** the fact that each area consists of one saturated steam module (4) and two superheated steam modules (6).
